Europäisches Patentamt

European Patent Office

Office européen des brevets

(11) Veröffentlichungsnummer: **0 316 694 B1**

(12) **EUROPÄISCHE PATENTSCHRIFT**

(45) Veröffentlichungstag der Patentschrift: **19.02.92**

(21) Anmeldenummer: **88118484.0**

(22) Anmeldetag: **05.11.88**

(51) Int. Cl.⁵: **A23F 5/20**

(54) **Verfahren zur Rohkaffee-Entcoffeinierung.**

(30) Priorität: **14.11.87 DE 3738783**

(43) Veröffentlichungstag der Anmeldung:
**24.05.89 Patentblatt  89/21**

(45) Bekanntmachung des Hinweises auf die
Patenterteilung:
**19.02.92 Patentblatt  92/08**

(84) Benannte Vertragsstaaten:
**AT BE CH DE ES FR GB GR IT LI LU NL SE**

(56) Entgegenhaltungen:
**EP-A- 0 175 025      DE-A- 1 692 284**
**DE-A- 2 357 590      DE-A- 2 737 793**
**FR-A- 2 079 261      LU-A- 67 211**

(73) Patentinhaber: **CR3-KAFFEEVEREDELUNG
M.HERMSEN GMBH. & CO.
Waterbergstrasse 14
W-2800 Bremen 41(DE)**

(72) Erfinder: **Hermsen, Manfred
Breitenfeldsmoor 37
W-2724 Hellwege(DE)**
Erfinder: **Sirtl, Wolfgang
Parkallee 46
W-2800 Bremen 1(DE)**

(74) Vertreter: **Eisenführ, Speiser & Strasse
Martinistrasse 24
W-2800 Bremen 1(DE)**

EP 0 316 694 B1

## Beschreibung

Die Erfindung betrifft ein Verfahren zur Rohkaffee-Entcoffeinierung, bei dem der Rohkaffee auf einen erhöhten Wassergehalt eingestellt und dann mit wasserhaltigem flüssigen Kohlendioxid selektiv extrahiert wird.

Aus der DE-AS 22 12 281 ist ein solches Verfahren bekannt, bei dem jedoch die Extraktion oberhalb des kritischen Drucks des Kohlendioxids durchgeführt wird. Diese Anwendung überkritischer Extraktionsdrucke wird als notwendig bezeichnet, weil angeblich bei niedrigeren Drücken Extraktstoffe mitextrahiert werden, so daß das Aroma und der Geschmack des Kaffees beeinträchtigt werden.

Für die Wirtschaftlichkeit von gattungsgemäßen Verfahren sind die aufzuwendenden Drücke von erheblicher Bedeutung. Insbesondere wenn das extrahierte Coffein durch Verdampfung des Kohlendioxids gewonnen werden soll, ergeben sich bei großen Druckdifferenzen zwischen Extraktions- und Coffeinabtrennungsstufe erhebliche Energieverluste. Das bekannte Verfahren benötigt trotz der hohen Drücke von $3,7.10^7$ Pa (380 atü) erhebliche Extraktionszeiten, die bei Coffeingewinnung durch $CO_2$-Verdampfung bei 18 Stunden liegen.

Aus der DE-OS 23 57 590 ist es bekannt, Rohkaffee zunächst mit Wasser zu extrahieren und der Extraktlösung das Coffein dann durch Flüssig/Flüssig-Extraktion mit $CO_2$ knapp unterhalb der kritischen Temperatur und bei dem dieser Temperatur entsprechenden Gleichgewichtsdruck des Kohlendioxids zu entziehen. Dieses Verfahren ist jedoch ebenfalls wirtschaftlich sehr aufwendig, da es die zusätzliche Wasserextraktion vor der nachfolgenden Flüssig/Flüssig-Extraktion erfordert und zudem die entcoffeinierte Rohkaffee-Extraktlösung auf den extrahierten Rohkaffee wieder aufimprägniert werden muß.

Aufgabe der Erfindung ist es daher, ein gattungsgemäßes Verfahren zur Rohkaffee-Entcoffeinierung zu schaffen, das wirtschaftlicher ist als die bekannten Verfahren und eine unaufwendige Abtrennung und Wiedergewinnung des Coffeins ohne Aromabeeinträchtigung des Rohkaffees gestattet.

Zur Lösung dieser Aufgabe ist das gattungsgemäße Verfahren erfindungsgemäß mit den Merkmalen des Patentanspruches 1 ausgestattet.

Die Erfindung beruht auf der überraschenden Feststellung, daß eine Rohkaffee-Entcoffeinierung bei erhöhtem Wassergehalt des Rohkaffees entgegen der durchgängigen Annahme im Stand der Technik ohne irgendwelche Aromaverluste, d.h. selektiv bei Extraktionsdrücken durchgeführt werden kann, die unterhalb des kritischen $CO_2$-Drucks liegen. Dies ermöglicht es, die Druckdifferenz zwischen Extraktionsstufe und Coffeinabtrennungsstufe minimal zu halten, so daß Energieverluste durch Druckgefälle im System weitestgehend vermieden werden. Das so abgetrennte Coffein unterscheidet sich innerhalb der analytischen Bestimmungsmöglichkeiten nicht von Coffein, das oberhalb des kritischen Drucks extrahiert worden ist. Die vom Fachmann befürchtete Koextraktion von Aroma- und anderen Inhaltsstoffen tritt nicht auf.

Dies war angesichts des hohen Lösungsvermögens von flüssigem unterkritischen Kohlendioxid für solche Stoffe nicht zu erwarten, zumal man sich gerade dieses große Lösungsvermögen im Stand der Technik stets zur möglichst vollständigen Extraktion von Inhaltsstoffen aus pflanzlichen Produkten zunutze gemacht hat (vgl. beispielsweise Food Technology 1969, Vol. 23, 1382 und ibid., Juni 1986, 66-69). Gerade dieser Umstand ist für das Vorurteil gegen die Verwendung von flüssigem unterkritischen $CO_2$ für die Extraktion verantwortlich, das in den oben genannten Vorveröffentlichungen zum Ausdruck kommt.

In vorteilhafter Ausgestaltung des erfindungsgemäßen Verfahrens kann der Wassergehalt des Rohkaffees zwischen 10 und 60 Gew.%, vorzugsweise zwischen 45 und 55 Gew.% liegen. Das Kohlendioxid sollte möglichst annähernd wassergesättigt der Extraktion zugeführt werden, damit der Wassergehalt des Rohkaffees im Verlauf der Extraktion nicht dadurch abnimmt, daß das Kohlendioxid andauernd Wasser herausschleppt.

Der Extraktionsdruck kann bis nahe unterhalb des kritischen Drucks liegen; je dichter der Extraktionsdruck an den kritischen Druck herankommt, desto größer ist die Dichte und damit das Lösungsvermögen des $CO_2$ für Coffein. Besonders bevorzugt liegt der Extraktionsdruck zwischen 65 und 70 . $10^5$ Pa (65 und 70 bar.)

Die Extraktionstemperatur liegt vorzugweise zwischen 20 und 25 °C; das erfindungsgemäße Temperaturintervall ist jedoch nach unten nur durch den Zeitaufwand und die $CO_2$-Menge beschränkt, die man einzusetzen bereit ist, während sich eine Beschränkung nach oben einerseits durch den Verdampfungspunkt des $CO_2$, andererseits durch bei hohen Extraktionstemperaturen vermehrt zu befürchtende Qualitätsschädigungen des Rohkaffees ergibt.

Besonders wirksam werden die erfindungsgemäß erhältlichen Vorteile realisiert, wenn das Kohlendioxid im Kreislauf durch die Extraktionsstufe und eine Coffeinabtrennungsstufe geführt wird. Die dann benötigten Druckverminderungs- bzw. -erhöhungseinrichtungen sowie eine Erwärmungsvorrichtung für das Kohlendioxid werden um eine Feuchte-Einstellungsstufe ergänzt, die im Kreislauf vor der Extraktionsstufe liegt und dafür sorgt, daß das $CO_2$ wasserbeladen wieder in die Extraktionsstufe eintritt. In der Coffeinabtrennungsstufe wird das $CO_2$ vorzugsweise verdampft, was eine besonders einfache und unaufwendige Gewinnung des Coffeins gestattet. Vorzugsweise ist das Verfahren **dadurch gekennzeichnet,** daß die Druckdifferenz des Kohlendioxids zwischen Extraktions- und Coffeinabtrennungsstufe so gering wie möglich, insbesondere kleiner als $30 . 10^5$ Pa (30 bar) und besonders bevorzugt kleiner als $10 . 10^5$ Pa (10 bar) ist. Diese Verfahrensführung ermöglicht die Einhaltung geringster Druckdifferenzen zwischen Extraktions-und Coffeinabtrennungsstufe und entsprechend minimale Energieverluste.

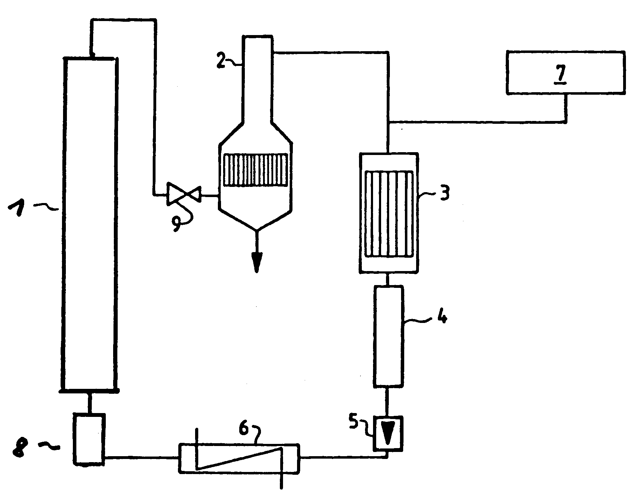

Im folgenden wird eine Ausführungsform des erfindungsgemäßen Verfahrens anhand der beigefügten Zeichnung näher erläutert. Diese zeigt schematisch eine zur Durchführung des Verfahrens geeignete Vorrichtung und veranschaulicht deren Arbeitsweise.

Die in der Zeichnung dargestellte Vorrichtung umfaßt einen Extraktionsbehälter 1, in dem der Rohkaffee mit eingestelltem Wassergehalt enthalten ist.

Flüssiges $CO_2$ wird von einem Vorrat 7 anfänglich in die Vorrichtung eingelassen. Es fließt (in der Zeichnung aufwärts) durch den Extraktionsbehälter 1 und reichert sich dabei mit Coffein an, welches es dem befeuchteten Rohkaffee entzieht. Das flüssige $CO_2$ steht dabei im Ausführungsbeispiel unter einem Druck von ungefähr $70 . 10^5$ Pa (70 bar) bei einer Temperatur von ca. 22 bis 23° C.

Das mit Coffein und etwas Wasser beladene flüssige $CO_2$ strömt vom Extraktionsbehälter 1 über ein Entspannungsventil 9 zu einem Abscheider 2. Es entspannt sich dabei auf ungefähr $60 . 10^5$ Pa (60 bar). Ein mit der Entspannung verbundener Temperaturabfall wird durch entsprechendes Heizen kompensiert.

Im Abscheider 2 entmischen sich Coffein, coffeingesättigtes Wasser und $CO_2$. Das am Kopf des Abscheiders 2 abgeführte gasförmige, coffein- und wasserfreie $CO_2$ gelangt nachfolgend zu einem Kondensator 3, in dem das $CO_2$ erneut verflüssigt wird. Das flüssige $CO_2$ fließt über einen Sammler 4 (dieser kann ggf. fehlen) zu einer Pumpe 5, die es durch einen Wärmetauscher 6 und einen Wasserbehälter 8 zum Boden des Extraktionsbehälters 1 zurückführt. Der Wärmetauscher 6 bringt das verflüssigte $CO_2$ wieder auf die Extraktionstemperatur von ca. 22 bis 23° C. Im Wasserbehälter 8 wird das $CO_2$ mit Wasser gesättigt.

Das so wasserbeladene $CO_2$ fließt dann erneut durch den Extraktionsbehälter 1 und entzieht dem Rohkaffee weiteres Coffein.

Wenn der Rohkaffee im gewünschten Ausmaß entcoffeiniert ist, wird er aus dem Extraktionsbehälter 1 entnommen und durch frischen Rohkaffee ersetzt.

Das bei der Verdampfung des $CO_2$ im Abscheider 2 anfallende Coffein kann am Boden des Abscheiders 2 mit einer Reinheit von über 99% entnommen werden.

## Patentansprüche

1. Verfahren zur Rohkaffee-Entcoffeinierung, bei dem der Rohkaffee auf einen erhöhten Wassergehalt eingestellt ist und dann mit wasserhaltigem flüssigen Kohlendioxid selektiv extrahiert wird, **dadurch gekennzeichnet,** daß die Extraktion bei einem Druck unterhalb des kritischen Drucks des Kohlendioxids durchgeführt wird.

2. Verfahren nach Anspruch 1, **dadurch gekennzeichnet,** daß der Wassergehalt des Rohkaffees mit Wasser und/oder Wasserdampf, auf 10 bis 60 Gew.-%, vorzugsweise 45 bis 55 Gew.-%, eingestellt wird.

3. Verfahren nach Anspruch 1 oder 2, **dadurch gekennzeichnet,** daß das Kohlendioxid bei der Extraktion wenigstens annähernd wassergesättigt ist.

4. Verfahren nach einem der Ansprüche 1 bis 3, **dadurch gekennzeichnet,** daß der Extraktionsdruck des Kohlendioxids bis nahe unterhalb des kritischen Drucks, vorzugsweise zwischen $65 . 10^5$ Pa und $70 . 10^5$ Pa (65 und 70 bar) liegt.

5. Verfahren nach einem der Ansprüche 1 bis 4, **dadurch gekennzeichnet,** daß die Extraktionstemperatur unterhalb der kritischen Temperatur des Kohlendioxids, vorzugsweise zwischen 20 und 25° C liegt.

6. Verfahren nach einem der Ansprüche 1 bis 5, **dadurch gekennzeichnet,** daß das Kohlendioxid im Kreislauf durch die Extraktionsstufen, eine Coffeinabtrennungsstufe und eine Feuchte-Einstellungsstufe geführt wird.

7. Verfahren nach Anspruch 6, **dadurch gekennzeichnet,** daß das Kohlendioxid in der Coffeinabtrennungsstufe verdampft wird.

8. Verfahren nach Anspruch 6 oder 7, **dadurch gekennzeichnet,** daß, die Druckdifferenz des Kohlendioxids zwischen Extraktions- und Coffeinabtrennungsstufe so gering wie möglich, insbesondere kleiner als $30 . 10^5$ Pa (30 bar) und besonders bevorzugt kleiner als $10 . 10^5$ Pa (10 bar) ist.

## Claims

1.  Process for the decaffeination of raw coffee, which comprises increasing the water content of raw coffee and selectively extracting caffeine from the raw coffee with aqueous liquid carbon dioxide, **characterized in** that the extraction is carried out at a pressure below the critical pressure of carbon dioxide.

2.  Process according to claim 1, **characterized in** that the water content of the raw coffee is increased to 10 to 60 wt.-%, preferably 45 to 55 wt.-%, using water and/or water vapour.

3.  Process according to claim 1 or 2, **characterized in** that the carbon dioxide is at least substantially saturated with water during extraction.

4.  Process according to one of claims 1 through 3, **characterized in** that the extraction pressure of the carbon dioxide lies slightly below the critical pressure, preferably between $65 \cdot 10^5$ PA and $70 \cdot 10^5$ Pa (65 and 70 bar).

5.  Process according to one of claims 1 through 4, **characterized in** that the extraction temperature is below the critical temperature of carbon dioxide, preferably between 20 and 25˚ C.

6.  Process according to one of claims 1 through 5, **characterized in** that the carbon dioxide is circulated through the extraction steps, a caffeine separation step and a moisture adjustment step.

7.  Process according to claim 6, **characterized in** that the carbon dioxide is evaporated in the caffeine separation step.

8.  Process according to claim 6 or 7, **characterized in** that the difference in carbon dioxide pressure between the extraction and caffeine separation steps is as small as possible, in particular smaller than $30 \cdot 10^5$ Pa (30 bar) and especially preferred smaller than $10 \cdot 10^5$ Pa (10 bar).

**Revendications**

1.  Procédé pour la décafeination de café brut, selon lequel le café brut est amené à une teneur en eau plus élevée et subit ensuite une opération d'extraction sélective à l'aide de dioxyde de carbone liquide, aqueux, caractérisé en ce que l'extraction est effectuée à une pression inférieure à la pression critique du dioxyde de carbone.

2.  Procédé selon la revendication 1, caractérisé en ce que la teneur en eau du café brut est ajustée à une valeur de 10 à 60% en poids, de préférence 45 à 55% en poids, à l'aide d'eau et/ou de vapeur d'eau.

3.  Procédé selon la revendication 1 ou 2, caractérisé en ce que le dioxyde de carbone est tout au moins approximativement saturé en eau, au cours de l'extraction.

4.  Procédé selon l'une des revendications 1 à 3, caractérisé en ce que la pression d'extraction du dioxyde de carbone peut aller jusqu'à une valeur très proche en-dessous de la pression critique, de préférence entre $65.10^5$ Pa et $70.10^5$ Pa (65 et 70 bar).

5.  Procédé selon l'une des revendications 1 à 4, caractérisé en ce que la température d'extraction du dioxyde de carbone se situe en-dessous de la température critique du dioxyde de carbone, de préférence entre 20 et 25˚ C.

6.  Procédé selon l'une des revendications 1 à 5, caractérisé en ce que l'on fait passer le dioxyde de carbone en circuit fermé, dans les étages d'extraction, un étage de séparation de la caféine et un étage d'ajustement de l'humidité.

7.  Procédé selon la revendication 6, caractérisé en ce que le dioxyde de carbone est vaporisé dans l'étage de séparation de la caféine.

8.  Procédé selon la revendication 6 ou 7, caractérisé en ce que la différence de pression du dioxyde de carbone, entre les étages d'extraction et de séparation de la caféine est la plus faible possible, et est notamment inférieure à $30.10^5$ Pa (30 bar) et de manière particulièrement préférée inférieure à $10.10^5$ Pa (10 bar).